# EUROPÄISCHE PATENTANMELDUNG

(11) **EP 4 712 464 A1**
(43) Veröffentlichungstag der Anmeldung: **18.03.2026**
(21) Anmeldenummer: 24200022.2
(22) Anmeldetag: 12.09.2024
(51) Int. Cl.: H04N 19/117, H04N 19/167, H04N 19/17, H04N 19/172, H04N 19/85

(54) **DATENREDUKTION BEI DER ÜBERWACHUNG VON GLIEDERFÜSSERN**

(71) Anmelder: Bayer Aktiengesellschaft, 51373 Leverkusen (DE)
(72) Erfinder: Die Erfindernennung liegt noch nicht vor
(74) Vertreter: BIP Patents

(57) **Zusammenfassung**

Die vorliegende Offenbarung befasst sich mit dem Erzeugen und Speichern und/oder Übermitteln von Bildaufnahmen eines Sammelbereichs, in dem sich ein oder mehrere Gliederfüßer befinden können, zum Zweck der Erkennung, Identifizierung und/oder Quantifizierung von Gliederfüßern. Gegenstände der vorliegenden Offenbarung sind ein computer-implementiertes Verfahren, eine Vorrichtung und ein Computerprogramm.

## Beschreibung

### TECHNISCHES GEBIET

Die vorliegende Offenbarung befasst sich mit dem Erzeugen und Speichern und/oder Übermitteln von Bildaufnahmen eines Sammelbereichs, in dem sich ein oder mehrere Gliederfüßer befinden können, zum Zweck der Erkennung, Identifizierung und/oder Quantifizierung von Gliederfüßern. Gegenstände der vorliegenden Offenbarung sind ein computer-implementiertes Verfahren, eine Vorrichtung und ein Computerprogramm.

### EINLEITUNG

WO2020/058175A1 offenbart ein Verfahren, ein System und ein Computerprogramm zum Detektieren von Gliederfüßern. Mittels einer Kamera wird eine Bildaufnahme eines Sammelbereichs, in dem sich ein oder mehrere Gliederfüßer aufhalten, erzeugt. Die Bildaufnahme wird über ein Netzwerk an ein Computersystem gesandt. Auf dem Computersystem kann die Bildaufnahme durch einen Nutzer und/oder automatisiert analysiert werden, z.B. um Gliederfüßer in der Bildaufnahme zu detektieren, zu identifizieren und/oder zu zählen.

Um Gliederfüßer in einer Bildaufnahme automatisiert detektieren, identifizieren und/oder zählen zu können, darf die Auflösung der Bildaufnahme nicht zu gering sein. Ferner darf die Bildaufnahme nicht zu stark komprimiert sein, da eine Komprimierung üblicherweise mit einem Informationsverlust und ggf. auftretenden Artefakten einhergeht. Je größer die Auflösung der Bildaufnahme ist und/oder je geringer der Kompressionsgrad der Bildaufnahme ist, desto größer ist üblicherweise die Dateigröße. Je größer die Dateigröße ist, desto mehr Daten müssen über das Netzwerk zu dem separaten Computersystem übermittelt werden.

Nicht jede Bildaufnahme des Sammelbereichs, die von der Kamera erzeugt wird, umfasst Gliederfüßer, d.h., es ist möglich, dass Bildaufnahmen erzeugt und übermittelt werden, in denen keine Gliederfüßer abgebildet sind.

Ebenso ist es denkbar, dass zwei Bildaufnahmen zu unterschiedlichen Zeitpunkten aufgenommen werden, bei denen keine Änderungen eingetreten sind oder bei denen eingetretene Änderungen irrelevant sind.

### ZUSAMMENFASSUNG

Diesen und weiteren Aspekten widmet sich die vorliegende Offenbarung.

Ein erster Gegenstand der vorliegenden Offenbarung ist ein computer-implementiertes Verfahren umfassend die Schritte:
- Empfangen einer Bildaufnahme, wobei in der Bildaufnahme ein Sammelbereich abgebildet ist,
- Bestimmen eines oder mehrerer Reduktionsparameter auf Basis des in der Bildaufnahme abgebildeten Sammelbereichs,
- Erzeugen eines reduzierten Datensatzes unter Verwendung des einen oder der mehreren Reduktionsparameter,
- Speichern des reduzierten Datensatzes und/oder Übermitteln des reduzierten Datensatzes an ein separates Computersystem.

Ein weiterer Gegenstand der vorliegenden Offenbarung ist eine Vorrichtung umfassend eine Verarbeitungseinheit und einen Speicher, wobei in dem Speicher ein Computerprogramm gespeichert ist, das die Vorrichtung veranlasst folgendes auszuführen:
- Empfangen einer Bildaufnahme, wobei in der Bildaufnahme ein Sammelbereich abgebildet ist,
- Bestimmen eines oder mehrerer Reduktionsparameter auf Basis des in der Bildaufnahme abgebildeten Sammelbereichs,
- Erzeugen eines reduzierten Datensatzes unter Verwendung des einen oder der mehreren Reduktionsparameter,
- Speichern des reduzierten Datensatzes und/oder Übermitteln des reduzierten Datensatzes an ein separates Computersystem.

Ein weiterer Gegenstand der vorliegenden Offenbarung ist ein nicht-flüchtiges computerlesbares Speichermedium, auf dem ein Computerprogramm gespeichert ist, das, wenn es von einer Verarbeitungseinheit eines Computersystems ausgeführt werden, das Computersystem veranlasst folgendes auszuführen:
- Empfangen einer Bildaufnahme, wobei in der Bildaufnahme ein Sammelbereich abgebildet ist,
- Bestimmen eines oder mehrerer Reduktionsparameter auf Basis des in der Bildaufnahme abgebildeten Sammelbereichs,
- Erzeugen eines reduzierten Datensatzes unter Verwendung des einen oder der mehreren Reduktionsparameter,
- Speichern des reduzierten Datensatzes und/oder Übermitteln des reduzierten Datensatzes an ein separates Computersystem.

### KURZE BESCHREIBUNG DER ZEICHNUNGEN

Fig. 1 zeigt eine Ausführungsform des computer-implementierten Verfahrens der vorliegenden Offenbarung in Form eines Ablaufschemas.
Fig. 2 zeigt beispielhaft und schematisch eine Ausführungsform der Vorrichtung der vorliegenden Offenbarung.

### AUSFÜHRLICHE OFFENBARUNG

Die Gegenstände der vorliegenden Offenbarung werden im Folgenden näher erläutert, ohne zwischen den Gegenständen der vorliegenden Offenbarung (Verfahren, Vorrichtung, Computerprogramm) zu unterscheiden. Vielmehr sollen die nachfolgenden Ausführungen sinngemäß für alle Gegenstände der Erfindung gelten, unabhängig davon, in welchem Zusammenhang (Verfahren, Vorrichtung, Computerprogramm) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausfiihrungsformen beschränkt sein.

Der Artikel "ein" bedeutet "ein oder mehrere"; es sei denn es steht ein "nur" oder 'leidglich" davor. Dies gilt analog auch für den Artikel "eine".

Die Ausdrücke "basierend auf" und "auf Basis von" bedeuten "zumindest teilweise basierend auf', sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Die vorliegende Offenbarung stellt Mittel zur Reduktion von Daten beim Übermitteln und/oder Speichern digitaler Bildaufnahmen eines Sammelbereichs bereit.

Der Sammelbereich ist ein Bereich, der von Gliederfüßern aufgesucht werden kann. Es kann sich dabei um eine ebene Oberfläche einer Tafel oder Karte oder dergleichen handeln. Es kann sich auch um den Boden eines Behälters handeln. Es kann sich auch um eine Flüssigkeit in einem Behälter handeln. Es kann sich auch um einen Teil einer Pflanze handeln, beispielsweise ein Blatt oder eine Frucht oder ein anderer Teil einer Pflanze.

In einer Ausführungsform der vorliegenden Offenbarung ist der Sammelbereich ein Teil einer Fangvorrichtung für Gliederfüßer.

In einer Ausführungsform der vorliegenden Offenbarung umfasst die Fangvorrichtung einen mit einer Flüssigkeit gefüllten Behälter, z.B. eine Fangschale, wie sie in WO2020/058175A1, WO2020/058170A1, WO2021/213824A1 oder WO2022/243150A1 beschrieben ist.

In einer Ausführungsform der vorliegenden Offenbarung umfasst die Fangvorrichtung eine mit einem Klebemittel versehene Oberfläche, wie sie in beispielsweise in WO2023/043871A1, WO2018/131853A1 oder WO2004/095919A2 beschrieben ist.

In einer Ausführungsform der vorliegenden Offenbarung umfasst die Fangvorrichtung einen zeltartigen Rahmen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen.

Als Lockmittel kann der Sammelbereich in einer Farbe gestaltet sein (z.B. gelb oder rot), die spezifische Gliederfüßer anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Im Falle der Verwendung eines mit einer Flüssigkeit gefüllten Behälters kann dieser mit Wasser und optional mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebstoff versehen sein, um Gliederfüßer bewegungsunfähig zu machen.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausfiihrungsform der vorliegenden Offenlegung bezieht sich der Begriff "Gliederfüßer" ausschließlich auf Insekten und Spinnentiere.

In einer anderen Ausfiihrungsform der vorliegenden Offenbarung bezieht sich der Begriff "Gliederfüßer" ausschließlich auf Insekten.

In einer anderen Ausfiihrungsform der vorliegenden Offenbarung bezieht sich der Begriff "Gliederfüßer" ausschließlich auf erwachsene Insekten.

In einer anderen Ausfiihrungsform der vorliegenden Offenbarung bezieht sich der Begriff "Gliederfüßer" ausschließlich auf Insekten in Form von Raupen.

In einer anderen Ausfiihrungsform der vorliegenden Offenbarung bezieht sich der Begriff "Gliederfüßer" ausschließlich auf Spinnentiere.

In einer anderen Ausfiihrungsform der vorliegenden Offenbarung bezieht sich der Begriff "Gliederfüßer" ausschließlich auf Milben.

In einem ersten Schritt wird eine Bildaufnahme empfangen, wobei in der Bildaufnahme ein Sammelbereich abgebildet ist. Mit anderen Worten: es wird eine Bildaufnahme empfangen, die einen Sammelbereich zeigt oder repräsentiert.

Der Begriff "Empfangen" kann bedeuten, dass eine Bildaufnahme von einer Kamera oder einem separaten Computersystem übermittelt wird. Der Begriff "Empfangen" kann bedeuten, dass eine Bildaufnahme von einer Kamera oder einem separaten Computersystem abgerufen wird. Der Begriff "Empfangen" kann bedeuten, dass eine Bildaufnahme aus einem Datenspeicher ausgelesen wird. Der Begriff "Empfangen" kann bedeuten, dass eine Bildaufnahme von einem Nutzer in das System der vorliegenden Offenbarung eingegeben wird.

Eine "Bildaufnahme" ist eine üblicherweise visuelle Repräsentation einer Szene und/oder eines oder mehrerer Objekte, die durch die Wechselwirkung von Licht mit lichtempfindlichen Substanzen oder Sensoren erfasst oder erzeugt wird. Der Begriff "Bildaufnahme" umfasst eine breite Palette von Formaten, einschließlich, aber nicht beschränkt auf digitale Fotos, Videos und Wärmebilder.

Üblicherweise handelt es sich bei der Bildaufnahme um eine digitale Bildaufnahme. Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

In einer digitalen Bildaufnahme werden Bildinhalte üblicherweise durch ganze Zahlen repräsentiert und gespeichert. In den meisten Fällen handelt es sich um zweidimensionale Bilder, die binär kodiert und gegebenenfalls komprimiert sein können. Bei den digitalen Bildaufnahmen handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildpunkten (Pixel) im Fall von zweidimensionalen Darstellungen oder Volumenelementen (Voxel) im Fall dreidimensionaler Darstellungen, denen jeweils eine Farbe bzw. ein Grauwert zugeordnet ist. Die Hauptmerkmale einer 2D-Rastergrafik sind daher die Bildgröße (Breite und Höhe gemessen in Pixeln, umgangssprachlich auch Bildauflösung genannt) sowie die Farbtiefe. Einem Bildpunkt einer digitalen Bilddatei ist üblicherweise eine Farbe oder ein Grauwert zugeordnet. Die für einen Bildpunkt verwendete Kodierung der Farbe definiert sich unter anderem über den Farbraum und die Farbtiefe. Der einfachste Fall ist ein Binärbild, bei dem ein Bildpunkt einen Schwarzweiß-Wert speichert. Bei einem Bild, dessen Farbe über den so genannten RGB-Farbraum definiert ist (RGB steht für die Grundfarben Rot, Grün und Blau), besteht jeder Bildpunkt aus drei Farbwerten, einem Farbwert für die Farbe Rot, einem Farbwert für die Farbe Grün und einem Farbwert für die Farbe Blau. Die Farbe eines Bildpunktes ergibt durch die Überlagerung (additives Mischen) der drei Farbwerte. Der einzelne Farbwert ist z.B. in 256 unterscheidbare Stufen diskretisiert, die Tonwerte genannt werden und üblicherweise von 0 bis 255 reichen. Die Farbnuance "0" eines jeden Farbkanals ist die dunkelste. Haben alle drei Kanäle den Tonwert 0, erscheint der entsprechende Bildpunkt schwarz; haben alle drei Kanäle den Tonwert 255, erscheint der entsprechende Bildpunkt weiß. Vereinfachend wird in dieser Beschreibung davon ausgegangen, dass die vorliegenden Bildaufnahmen RGB-Rastergrafiken mit einer spezifischen Zahl an Bildpunkten sind. Diese Annahme soll jedoch in keiner Weise limitierend verstanden werden. Dem Fachmann der Bildbearbeitung ist klar, wie er die Lehre dieser Beschreibung auf Bilddateien, die in anderen Bildformaten vorliegen und/oder bei denen die Farbwerte anders kodiert sind, übertragen kann.

Bei der mindestens einen Bildaufnahme kann es sich auch um einen oder mehrere Ausschnitte aus einer Videosequenz handeln.

Die mindestens eine Bildaufnahme wird üblicherweise mit Hilfe einer Kamera oder mehreren Kameras erzeugt.

Eine "Kamera" ist ein Gerät oder System, das dazu bestimmt ist, Bildaufnahmen von externen Objekten und Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf herkömmliche Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD-(CCD = *charge-coupled device*) oder CMOS-Sensoren (CMOS = *complementary metal-oxidesemiconductor*)*.* Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Die mindestens eine Kamera ist auf einen Sammelbereich gerichtet. Mit anderen Worten: die mindestens eine Kamera ist so ausgerichtet und konfiguriert, dass sie Bildaufnahmen von dem Sammelbereich oder einem Teil davon erzeugt.

Die Verwendung von mehreren Kameras, die einen Gegenstand z.B. aus unterschiedlichen Richtungen betrachten und Bildaufnahmen aus unterschiedlichen Blickrichtungen erzeugen, hat den Vorteil, dass Tiefeninformationen erfasst werden. Eine oder mehrere Kameras können ein Bestandteil der Vorrichtung der vorliegenden Offenbarung sein.

In der empfangenen Bildaufnahme ist ein Sammelbereich abgebildet. Der Sammelbereich kann einen oder mehrere Gliederfüßer umfassen. Es ist auch möglich, dass der Sammelbereich keinen Gliederfüßer umfasst. Es ist auch möglich, dass der Sammelbereich ein oder mehrere andere Objekte umfasst.

Es ist möglich, dass mehr als eine Bildaufnahme empfangen wird, z.B. zwei, drei, vier fünf, sechs, sieben, acht, neun, zehn oder mehr als zehn. Es ist möglich, dass empfangene Bildaufnahmen den Sammelbereich zu unterschiedlichen Zeitpunkten zeigen. Es ist möglich, dass empfangene Bildaufnahmen den Sammelbereich aus unterschiedlichen Perspektiven zeigen. Es ist möglich, dass empfangene Bildaufnahmen den Sammelbereich unter unterschiedlichen Belichtungen zeigen. Es ist möglich, dass empfangene Bildaufnahmen mit unterschiedlichen Sensoren aufgenommen wurden. Es ist möglich, dass empfangene Bildaufnahmen mit variierendem Fokus (*focus stacking*) aufgenommen wurden.

Auf Basis der (mindestens einen) empfangenen Bildaufnahme wird ein Reduktionsparameter bestimmt. Genauer gesagt erfolgt die Bestimmung des Reduktionsparameters auf Basis des in der Bildaufnahme abgebildeten Sammelbereichs, in dem sich ein oder mehrere Gliederfüßer befinden können.

Es ist möglich, dass auf Basis des in der Bildaufnahme abgebildeten Sammelbereichs mehrere Reduktionsparameter bestimmt werden.

Der mindestens eine Reduktionsparameter kann angeben, ob und/oder wie auf Basis der empfangenen Bildaufnahme ein reduzierter Datensatz erzeugt wird. Der Begriff "reduziert" bezieht sich auf die Größe des Datensatzes, d.h. die Datenmenge, die der Datensatz umfasst. Mit anderen Worten, ein "reduzierter Datensatz" ist ein "in seiner Größe reduzierter Datensatz". Dabei ist die Größe des reduzierten Datensatzes kleiner als die eines Referenzdatensatzes. In einer Ausführungsform der vorliegenden Offenbarung ist der Referenzdatensatz die mindestens eine empfangene Bildaufnahme oder der Referenzdatensatz umfasst die mindestens eine empfangene Bildaufnahme. Mit anderen Worten: in einer Ausführungsform der vorliegenden Offenbarung ist die Datenmenge des reduzierten Datensatzes geringer als die mindestens eine empfangene Bildaufnahme oder ein Referenzdatensatz, der die mindestens eine empfangene Bildaufnahme umfasst.

In einer Ausführungsform der vorliegenden Offenbarung ist oder umfasst der reduzierte Datensatz ein oder mehrere reduzierte Bildaufnahmen. In diesem Fall bezieht sich der Begriff "Reduktion" auf den Prozess der Verringerung der Größe einer Bildaufnahme. Das Ergebnis einer solchen Reduktion ist eine "reduzierte Bildaufnahme". Die mindestens eine reduzierte Bildaufnahme weist gegenüber der mindestens einen empfangenen Bildaufnahme eine reduzierte Größe (d.h. geringere Datenmenge) auf.

Der "Reduktionsparameter" kann ein Parameter sein, der eine Reduktion der Größe einer Bildaufnahme spezifiziert. Der Reduktionsparameter kann beispielsweise angeben, ob die Größe einer Bildaufnahme reduziert wird und/oder wie die Größe einer Bildaufnahme reduziert wird.

Es gibt verschiedene Möglichkeiten eine Größe einer Bildaufnahme zu reduzieren. Nachfolgend sind einige Beispiele beschrieben, ohne die vorliegenden Offenbarung auf diese Beispiele beschränken zu wollen.

Eine Möglichkeit, die Größe einer Bildaufnahme zu reduzieren, besteht darin, die Auflösung zu reduzieren. Die Reduktion der Auflösung einer Bildaufnahme bezieht sich üblicherweise auf den Prozess der Verringerung der Anzahl von Bildelementen (z.B. Pixel oder Voxel), die zur Darstellung des Inhalts der Bildaufnahme verwendet werden. Dies führt in der Regel zu einer Verringerung der Detailgenauigkeit und/oder Klarheit des abgebildeten Gegenstands, wodurch die Bildaufnahme weniger scharf erscheint. Eine Möglichkeit, die Auflösung zu reduzieren, ist das Re-Sampling. Hierbei können mehrere Bildelemente (z.B. Pixel oder Voxel) zu einem Bildelement zusammengefasst (kombiniert) werden. Dadurch wird die Zahl der Bildelemente verringert. Es gibt verschiedene Re-Sampling-Verfahren wie beispielsweise Nearest Neighbour, bilineare und bikubische Interpolation, die sich auf unterschiedliche Weise auf die Bildqualität auswirken können. Der Reduktionsparameter kann angeben, ob die Auflösung einer Bildaufnahme reduziert wird, wie die Auflösung der Bildaufnahme reduziert wird und/oder in welchem Umfang die Auflösung der Bildaufnahme reduziert wird. Die Auflösung einer Bildaufnahme, in der keine Gliederfüßer abgebildet sind, kann stärker reduziert werden als die Auflösung einer Bildaufnahme, in der ein oder mehrere Gliederfüßer abgebildet sind. Die Auflösung einer Bildaufnahme, in der ein oder mehrere Gliederfüßer abgebildet sind, die für einen Nutzer nicht relevant und/oder interessant sind, kann stärker reduziert werden als die Auflösung einer Bildaufnahme, in der ein oder mehrere Gliederfüßer abgebildet sind, die für einen Nutzer relevant und/oder interessant sind. Dabei kann ein Gliederfüßer für einen Nutzer z.B. dann relevant und/oder interessant sein, wenn es sich um einen Schädling handelt. Ein relevanter und/oder interessanter Gliederfüßer wird in dieser Offenbarung auch als "spezifischer Gliederfüßer" bezeichnet. Die Auflösung einer Bildaufnahme, die bereits analysiert wurde, um einen oder mehrere Gliederfüßer in dem abgebildeten Sammelbereich zu detektieren, lokalisieren, identifizieren und/oder zu zählen, kann stärker reduziert werden als die Auflösung einer Bildaufnahme, die noch nicht analysiert wurde, um einen oder mehrere Gliederfüßer in dem abgebildeten Sammelbereich zu detektieren, lokalisieren, identifizieren und/oder zu zählen.

Eine weitere Möglichkeit, die Größe einer Bildaufnahme zu reduzieren, besteht darin, die Auflösung in einem oder mehreren Teilbereichen zu reduzieren, während die Auflösung in einem oder mehreren anderen Teilbereichen nicht reduziert wird. Ebenso ist es möglich, die Auflösung in unterschiedlichen Teilbereichen unterschiedlich stark zu reduzieren. So ist es beispielsweise möglich, die Auflösung in einem oder mehreren Teilbereichen der Bildaufnahme, in dem/denen ein oder mehrere Gliederfüßer abgebildet sind, nicht zu reduzieren und die Auflösung in einem oder mehreren Teilbereichen, in dem/denen keine Gliederfüßer abgebildet sind, zu reduzieren. Ebenso ist es möglich, die Auflösung in einem oder mehreren Teilbereichen der Bildaufnahme, in dem/denen ein oder mehrere Gliederfüßer abgebildet sind, weniger stark zu reduzieren als die Auflösung in einem oder mehreren Teilbereichen, in dem/denen keine Gliederfüßer abgebildet sind. Die Auflösung eines Teilbereichs, in dem ein oder mehrere Gliederfüßer vorhanden sind, die für einen Nutzer relevant und/oder interessant sind, kann nicht oder weniger stark reduziert werden als die Auflösung in einem Teilbereich, in dem keine Gliederfüßer vorhanden sind, die für einen Nutzer relevant und/oder interessant sind. Dabei kann ein Gliederfüßer für einen Nutzer z.B. dann relevant und/oder interessant sein, wenn es sich um einen Schädling handelt. Der Reduktionsparameter kann angeben, in welchem Teilbereich / welchen Teilbereichen der Bildaufnahme die Auflösung reduziert wird, wie die Auflösung reduziert wird und/oder in welchem Umfang die Auflösung reduziert wird.

Eine weitere Möglichkeit, die Größe einer Bildaufnahme zu reduzieren, besteht darin, die Farbtiefe (bzw. die Anzahl an Graustufen bei Grauwert-Darstellungen) zu reduzieren. Die Farbtiefe kann z.B. reduziert oder stärker reduziert werden, wenn die Bildaufnahme keinen oder keinen relevanten/interessanten Gliederfüßer umfasst und/oder, wenn die Bildaufnahme bereits analysiert wurde, um einen oder mehrere Gliederfüßer in dem abgebildeten Sammelbereich zu detektieren, lokalisieren, identifizieren und/oder zu zählen. Der Reduktionsparameter kann angeben, ob die Farbtiefe reduziert wird, wie die Farbtiefe der Bildaufnahme reduziert wird und/oder in welchem Umfang die Farbtiefe der Bildaufnahme reduziert wird.

Eine weitere Möglichkeit, die Größe einer Bildaufnahme zu reduzieren, besteht darin, die Farbtiefe eines oder mehrerer Teilbereiche zu reduzieren. Die Farbtiefe kann z.B. in einem Teilbereich reduziert oder stärker reduziert werden, wenn der Teilbereich keinen oder keinen relevanten/interessanten Gliederfüßer umfasst und/oder, wenn der Teilbereich bereits analysiert wurde, um einen oder mehrere Gliederfüßer in dem abgebildeten Sammelbereich zu detektieren, lokalisieren, identifizieren und/oder zu zählen. Der Reduktionsparameter kann angeben, in welchem Teilbereich / welchen Teilbereichen der Bildaufnahme die Farbtiefe reduziert wird, wie die Farbtiefe reduziert wird und/oder in welchem Umfang die Farbtiefe reduziert wird.

Eine weitere Möglichkeit, die Größe einer Bildaufnahme zu reduzieren, besteht darin, einen oder mehrere Teile der Bildaufnahme wegzuschneiden und/oder zu maskieren. Beim Maskieren können Farbwerte/Grauwerte von Bildelementen durch einen festen Wert (z.B. den Wert Null) ersetzt werden. Es können diejenigen Teilbereiche weggeschnitten und/oder maskiert werden, die keinen oder keinen interessanten/relevanten Gliederfüßer umfassen. Der Reduktionsparameter kann angeben, ob ein oder mehrere Teile der Bildaufnahme weggeschnitten oder maskiert werden und/oder welcher Teil / welche Teile weggeschnitten oder maskiert werden. Umgekehrt können auch ein oder mehrere Teilbereiche extrahiert werden, die einen oder mehrere Gliederfüßer oder einen oder mehrere relevante/interessante Gliederfüßer umfassen. Der Vorgang des Extrahierens relevanter/interessanter Teilbereiche ist äquivalent zum Wegschneiden nicht relevanter / nicht interessanter Teilbereiche.

Eine weitere Möglichkeit, die Größe einer Bildaufnahme zu reduzieren, besteht in einer Komprimierung der Bildaufnahme. Der Begriff "Komprimierung" (auch als "Kompression" bezeichnet) bezieht sich auf den Prozess der Verringerung der Datenmenge, die zur Darstellung eines Bildinhalts erforderlich ist, z.B. durch die Anwendung von Algorithmen, die Redundanzen und irrelevante Informationen beseitigen. Die Wirksamkeit der Komprimierung kann anhand des Komprimierungsverhältnisses gemessen werden, das angibt, in welchem Umfang die ursprüngliche Datenmenge reduziert wurde. Eine Bildaufnahme, die keinen Gliederfüßer oder keinen relevanten/interessanten Gliederfüßer umfasst, kann stärker komprimiert werden als eine Bildaufnahme, die einen Gliederfüßer oder relevanten/interessanten Gliederfüßer umfasst. Eine Bildaufnahme, die bereits analysiert wurde, um einen oder mehrere Gliederfüßer in dem abgebildeten Sammelbereich zu detektieren, lokalisieren, identifizieren und/oder zu zählen, kann stärker komprimiert werden als eine Bildaufnahme, die noch nicht analysiert wurde, um einen oder mehrere Gliederfüßer in dem abgebildeten Sammelbereich zu detektieren, lokalisieren, identifizieren und/oder zu zählen. Der Reduktionsparameter kann angeben, ob eine Bildaufnahme überhaupt komprimiert wird. Der Reduktionsparameter kann angeben, ob eine Bildaufnahme verlustbehaftet oder verlustfrei komprimiert wird. Der Reduktionsparameter kann angeben, wie eine Bildaufnahme komprimiert wird, d.h. er kann z.B. angeben, welche Komprimierungstechnik(en) und/oder welcher Komprimierungsalgorithmus / welche Komprimierungsalgorithmen zur Komprimierung der Bildaufnahme verwendet wird/werden. Der Reduktionsparameter kann einen Komprimierungslevel angeben. Der Begriff "Komprimierungslevel" bezieht sich auf eine Einstellung oder einen Parameter innerhalb eines Komprimierungsalgorithmus, der bestimmt, wie "aggressiv" der Algorithmus versucht, die Größe der Bildaufnahme zu reduzieren. Höhere Komprimierungslevel bedeuten in der Regel eine stärkere Komprimierung, die zu kleineren Dateigrößen, aber möglicherweise zu einer geringeren Bildqualität aufgrund von Detailverlusten oder der Einführung von Kompressionsartefakten führt. Der Reduktionsparameter kann das zu erzielende Komprimierungsverhältnis angeben. Das Komprimierungsverhältnis ist ein Maß für die durch den Komprimierungsprozess erzielte Größenreduzierung. Sie wird in der Regel als Verhältnis oder Prozentsatz ausgedrückt, wobei die Größe der komprimierten Bildaufnahme mit der Größe der empfangenen Bildaufnahme verglichen wird. Anstelle des Begriffes Komprimierungsverhältnis wird oftmals auch der Begriff "Komprimierungsgrad" verwendet. In dieser Offenbarung werden die Begriffe synonym verwendet, d.h. das Komprimierungsverhältnis kann auch ein Komprimierungsgrad sein.

Verlustfreie Komprimierungsalgorithmen reduzieren die Dateigröße, ohne dass die Bildqualität oder Details verloren gehen. Beispiele für verlustfreie Komprimierungsalgorithmen sind:
Die Lauflängenkodierung ersetzt Sequenzen von Bildelementen mit identischem Farbwert durch eine Zählung der sich wiederholenden Bildelemente und einen einzelnen Wert dieses Bildelements und wird damit beispielsweise für die Komprimierung von Bildaufnahmen mit großen Flächen einheitlicher Farbwerte empfohlen.

Die Huffinan-Kodierung ist ein frequenzbasiertes Kodierungsverfahren, das häufigeren Bildelementen kürzere Codes und weniger häufigen Bildelementen längere Codes zuweist.

Das LZW-Verfahren (LZW: Lempel-Ziv-Welch) ist ein wörterbuchbasiertes Komprimierungsverfahren, bei dem Zeichensequenzen (oder Variablen, die Bildelemente charakterisieren) durch kürzere Codes mit fester Länge ersetzt werden, die in einem während des Komprimierungsprozesses erstellten Wörterbuch enthalten sind.

Das PNG-Bildformat (PNG: Portable Network Graphics) verwendet eine Kombination von Methoden wie Prädiktion, Filterung und Entropie-Kodierung (wie Huffinan-Kodierung) zur Komprimierung von Bildaufnahmen ohne Qualitätsverlust.

Das Deflate-Verfahren wird im PNG-Bildformat und anderen Formaten verwendet und kombiniert LZ77-Algorithmen und Huffinan-Kodierung für eine effektive verlustfreie Komprimierung.

Verlustbehaftete Komprimierungstechniken erreichen höhere Komprimierungsraten, indem sie einen Teil der Bilddaten verwerfen, was zu einem Qualitätsverlust führen kann. Beispiele für verlustfreie Komprimierungsalgorithmen sind:
JPEG (Joint Photographic Experts Group) ist ein weit verbreiteter Bildkomprimierungsstandard und verwendet eine Kombination aus diskreter Kosinustransformation (DCT), Quantisierung und Huffman-Kodierung.

Anstelle der DCT verwendet die Wavelet-Komprimierung eine Wavelet-Transformationen zur Komprimierung einer Bildaufnahme. Sie wird beispielsweise in JPEG 2000 verwendet.

Die fraktale Komprimierung basiert auf der mathematischen Theorie der Fraktale und findet selbstähnliche Teile eines Bildes und verwendet diese, um Kompressionsmuster zu erstellen.

Das HEIF-Bildformat (Hocheffizientes Bilddateiformat) verwendet die HEVC-Methode (High Efficiency Video Compression), auch bekannt als H.265, zur Komprimierung von Bildern.

Es können auch mehrere Reduktionstechniken miteinander kombiniert werden.

Das Bestimmen des Reduktionsparameters auf Basis des in der Bildaufnahme abgebildeten Sammelbereichs kann einen oder mehrere der folgenden Schritte umfassen:
(i) Prüfen der Anwesenheit mindestens eines Gliederfüßers in dem abgebildeten Sammelbereich,
(ii) Prüfen der Anwesenheit mindestens eines spezifischen Gliederfüßers in dem abgebildeten Sammelbereich / Identifizieren eines oder mehrerer Gliederfüßer in dem abgebildeten Sammelbereich,
(iii) Zählen von Gliederfüßern in dem abgebildeten Sammelbereich,
(iv) Bestimmen des Entwicklungsstadiums eines oder mehrerer Gliederfüßer in dem abgebildeten Sammelbereich,
(v) Bestimmen der Größe eines oder mehrerer Gliederfüßer in dem abgebildeten Sammelbereich,
(vi) Vergleichen einer ersten empfangenen Bildaufnahme mit einer zweiten empfangenen Bildaufnahme, wobei die erste empfangene Bildaufnahme und die zweite empfangene Bildaufnahme den Sammelbereich zu unterschiedlichen Zeitpunkten zeigen,
(vii) Lokalisieren eines oder mehrerer Gliederfüßer in dem abgebildeten Sammelbereich.

Zu (i): Es kann geprüft werden, ob mindestens ein Gliederfüßer in dem abgebildeten Sammelbereich vorhanden ist. Das Prüfen der Anwesenheit eines Gliederfüßers in dem Sammelbereich kann mit Hilfe eines Objekterkennungsverfahrens erfolgen. Objekterkennungsverfahren sind im Stand der Technik beschrieben (siehe z.B. R. Girshick et al.: Rich feature hierarchies for accurate object detection and semantic segmentation, arXiv:1311.2524v5; Girshick: FastR-CNN, arXiv:1504.08083v2; S. Ren et al.: Faster R-CNN: Towards Real-Time Object Detection with Region Proposal Networks, arXiv:1506.01497v3; J. Redmon et al.: You Only Look Once: Unified, Real-Time Object Detection, arXiv: 1506.02640v5; W. Liu et al.: SSD: Single Shot MultiBox Detector, arXiv: 1512.02325v5; N. Carion et al.: End-to-End Object Detection with Transformers, arXiv:2005.12872v3).

Das Objekterkennungsverfahren kann so ausgestaltet sein, dass es die Anwesenheit eines Gliederfüßers anzeigt, ohne zu spezifizieren, um was für einen Gliederfüßer es sich handelt. Das Objekterkennungsverfahren kann so ausgestaltet sein, dass es Gliederfüßer in der Bildaufnahme erkennt und jeden erkannten Gliederfüßer einer von mindestens zwei Klassen zuordnet. Dabei können verschiedene Klassen verschiedene Unterklassen, Überordnungen, Ordnungen, Unterordnungen, Familien, Gattungen und/oder Arten von Gliederfüßern repräsentieren. Die Klasse, der ein Gliederfüßer zugeordnet wird, kann angeben, in welchem Entwicklungsstadium der Gliederfüßer sich befindet. Die Klasse, der ein Gliederfüßer zugeordnet wird, kann angeben, ob es sich um einen Nützling, einen Schädling oder um einen neuralen Gliederfüßer (einen, der für eine betrachtete Pflanze weder schädlich noch nützlich ist oder bei dem ein Schaden oder Nutzen noch nicht erkannt wurde) handelt. Die Klasse, der ein Gliederfüßer zugeordnet wird, kann angeben, ob es sich um einen Nützling oder ein Schädling für eine bestimmte Pflanze handelt. Die Klasse, der ein Gliederfüßer zugeordnet wird, kann angeben, ob und/oder mit welchem Pflanzenschutzmittel der Gliederfüßer bekämpft werden kann. Die Klasse, der ein Gliederfüßer zugeordnet wird, kann angeben, ob und/oder mit welchem Pflanzenschutzmittel der Gliederfüßer nicht bekämpft werden kann.

Ist kein Gliederfüßer in dem Sammelbereich vorhanden, so ist eine Identifizierung von in dem Sammelbereich vorhandenen Gliederfüßern nicht erforderlich. Ist kein Gliederfüßer in dem Sammelbereich vorhanden, so ist die Bildaufnahme für einen Nutzer nicht oder weniger relevant, als wenn sich ein oder mehrere Gliederfüßer in dem Sammelbereich befinden würden. Die Größe der Bildaufnahme kann (erheblich) reduziert werden. Die Bildaufnahme kann auch verworfen werden. Die Bildaufnahme kann verlustbehaftet komprimiert werden. Die Auflösung und/oder die Farbtiefe können reduziert werden. Der mindestens eine Reduktionsparameter kann (a) angeben, dass die Größe der Bildaufnahme zu reduzieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel).

Befindet sich ein Gliederfüßer oder befinden sich mehrere Gliederfüßer in dem Sammelbereich, kann eine Identifizierung sinnvoll sein (sofern der Gliederfüßer nicht bereits durch das Objekterkennungsverfahren identifiziert worden ist). Befindet sich ein Gliederfüßer oder befinden sich mehrere Gliederfüßer in dem Sammelbereich, kann die Bildaufnahme für einen Nutzer relevant und/oder interessant sein. Der mindestens eine Reduktionsparameter kann (a) angeben, dass die Bildaufnahme nicht oder nur wenig oder nur verlustfrei zu komprimieren ist, (c) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel), (d) einen oder mehrere Teilbereiche angeben, bei denen die Bildauflösung und/oder Farbtiefe zu reduzieren ist, (e) einen oder mehrere Teilbereiche angeben, die wegzuschneiden oder zu maskieren sind.

Zu (ii): Es kann geprüft werden, ob mindestens ein spezifischer Gliederfüßer in dem abgebildeten Sammelbereich vorhanden ist. Mit anderen Worten: es kann ein oder es können mehrere spezifische Gliederfüßer in dem abgebildeten Sammelbereich identifiziert werden. Ein solcher spezifischer Gliederfüßer kann ein Gliederfüßer sein, über deren Anwesenheit ein Nutzer Kenntnis erlangen will oder sollte, z.B. weil es sich um einen Schädling handelt. Es ist möglich, dass ein Nutzer spezifiziert, welche spezifischen Gliederfüßer für den Nutzer relevant sind. Ebenso ist denkbar, dass die erfindungsgemäße Vorrichtung eine Fangvorrichtung für einen oder mehrere spezifische Gliederfüßer umfasst und die Fangvorrichtung damit selbst bereits einen oder mehrere spezifische Gliederfüßer definiert.

Befindet sich kein spezifischer Gliederfüßer in dem Sammelbereich, so ist die Bildaufnahme für einen Nutzer nicht oder weniger relevant, als wenn sich ein oder mehrere spezifische Gliederfüßer in dem Sammelbereich befinden würden. Die Größe der Bildaufnahme kann erheblich reduziert werden. Die Bildaufnahme kann auch verworfen werden. Die Bildaufnahme kann verlustbehaftet komprimiert werden. Die Auflösung und/oder die Farbtiefe können reduziert werden. Der mindestens eine Reduktionsparameter kann (a) angeben, dass die Größe der Bildaufnahme zu reduzieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel).

Befindet sich ein Gliederfüßer oder befinden sich mehrere spezifische Gliederfüßer in dem Sammelbereich, kann die Bildaufnahme für einen Nutzer relevant und/oder interessant sein. Der mindestens eine Reduktionsparameter kann (a) angeben, dass die Bildaufnahme nicht oder nur wenig oder nur verlustfrei zu komprimieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel), (d) einen oder mehrere Teilbereiche angeben, bei denen die Bildauflösung und/oder Farbtiefe zu reduzieren ist, (e) einen oder mehrere Teilbereiche angeben, die wegzuschneiden oder zu maskieren oder zu extrahieren sind.

Zu (iii): Es kann die Zahl der in dem abgebildeten Sammelbereich vorhandenen Gliederfüßer ermittelt werden.

Ist die Zahl der Gliederfüßer kleiner als ein vordefinierter Schwellenwert, kann es sein, dass die Bildaufnahme als irrelevant/uninteressant erachtet wird. Die Bildaufnahme kann verworfen werden. Die Bildaufnahme kann (erheblich) reduziert werden. Die Bildaufnahme kann verlustbehaftet komprimiert werden. Der mindestens eine Reduktionsparameter kann (a) angeben, dass die Größe der Bildaufnahme zu reduzieren ist, (b) eine oder mehrere Reduktionstechniken (z.B. Komprimierungstechniken/- algorithmen) angeben, mit der/denen die Bildaufnahme zu reduzieren ist, (c) Parameter der einen oder der mehreren Reduktionstechniken angeben (z.B. das Komprimierungslevel).

Ist die Zahl der Gliederfüßer größer als ein vordefinierter Schwellenwert, kann es sein, dass die Bildaufnahme als relevant/interessant erachtet wird. Es kann sein, dass die Bildaufnahme nicht oder weniger reduziert wird, als wenn die Zahl der Gliederfüßer kleiner als der vordefinierte Schwellenwert wäre. Der mindestens eine Reduktionsparameter kann (a) angeben, dass die Bildaufnahme nicht oder nur wenig oder nur verlustfrei zu komprimieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel), (d) einen oder mehrere Teilbereiche angeben, bei denen die Bildauflösung und/oder Farbtiefe zu reduzieren ist, (e) einen oder mehrere Teilbereiche angeben, die wegzuschneiden oder zu maskieren sind.

Zu (iv): Es kann das Entwicklungsstadium eines oder mehrerer (spezifischer) Gliederfüßer in dem abgebildeten Sammelbereich ermittelt werden. Es ist denkbar, dass das Entwicklungsstadium eines oder mehrerer Gliederfüßer oder eines oder mehrerer spezifischer Gliederfüßer einen Einfluss darauf hat, ob ein (spezifischer) Gliederfüßer für einen Nutzer interessant und/oder relevant ist. Es kann zum Beispiel sein, dass ein (spezifischer) Gliederfüßer nur dann ein Schädling darstellt, wenn er sich in einem spezifischen Entwicklungsstadium befindet.

Ist in der Bildaufnahme kein Gliederfüßer in einem spezifischen Entwicklungsstadium vorhanden, kann es sein, dass die Bildaufnahme als weniger relevant erachtet wird, als wenn in der Bildaufnahme ein Gliederfüßer in dem spezifischen Entwicklungsstadium abgebildet wäre. Die Bildaufnahme kann verworfen werden. Die Bildaufnahme kann (erheblich) reduziert werden. Die Bildaufnahme kann verlustbehaftet komprimiert werden. Der mindestens eine Reduktionsparameter kann (a) angeben, dass die Größe der Bildaufnahme zu reduzieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel).

Ist in der Bildaufnahme mindestens ein (spezifischer) Gliederfüßer in einem spezifischen Entwicklungsstadium vorhanden, kann es sein, dass die Bildaufnahme für einen Nutzer als relevant und/oder interessant erachtet wird. Der mindestens eine Reduktionsparameter kann (a) angeben, dass die Bildaufnahme nicht oder nur wenig oder nur verlustfrei zu komprimieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel), (d) einen oder mehrere Teilbereiche angeben, bei denen die Bildauflösung und/oder Farbtiefe zu reduzieren ist, (e) einen oder mehrere Teilbereiche angeben, die wegzuschneiden oder zu maskieren sind.

Zu (v): Es kann die Größe eines oder mehrerer (spezifischer) Gliederfüßer in dem Sammelbereich ermittelt werden. Es ist denkbar, dass die Größe eines oder mehrerer Gliederfüßer oder eines oder mehrerer spezifischer Gliederfüßer einen Einfluss darauf hat, ob ein (spezifischer) Gliederfüßer für einen Nutzer interessant und/oder relevant ist. Es kann zum Beispiel sein, dass ein (spezifischer) Gliederfüßer nur dann ein Schädling darstellt, wenn er eine Größe oberhalb oder unterhalb eines Schwellenwerts aufweist.

Ist in der Bildaufnahme kein Gliederfüßer mit einer Größe oberhalb oder unterhalb des Schwellenwerts vorhanden, kann es sein, dass die Bildaufnahme als weniger relevant erachtet wird, als wenn in der Bildaufnahme ein Gliederfüßer mit einer Größe oberhalb oder unterhalb des Schwellenwerts vorhanden wäre. Die Bildaufnahme kann verworfen werden. Die Bildaufnahme kann (erheblich) reduziert werden. Die Bildaufnahme kann verlustbehaftet komprimiert werden. Der mindestens eine Reduktionsparameter kann (a) angeben, dass die Größe der Bildaufnahme zu reduzieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel).

Ist in der Bildaufnahme mindestens ein (spezifischer) Gliederfüßer mit einer Größe oberhalb oder unterhalb des Schwellenwerts vorhanden, kann es sein, dass die Bildaufnahme für einen Nutzer als relevant und/oder interessant erachtet wird. Der mindestens eine Reduktionsparameter kann (a) angeben, dass die Bildaufnahme nicht oder nur wenig oder nur verlustfrei zu komprimieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel), (d) einen oder mehrere Teilbereiche angeben, bei denen die Bildauflösung und/oder Farbtiefe zu reduzieren ist, (e) einen oder mehrere Teilbereiche angeben, die wegzuschneiden oder zu maskieren sind.

Zu (vi): Es können mindestens zwei Bildaufnahmen empfangen werden; eine erste Bildaufnahme und eine zweite Bildaufnahme, wobei die erste Bildaufnahme und die zweite Bildaufnahme den Sammelbereich üblicherweise zu unterschiedlichen Zeitpunkten repräsentieren. Die erste und die zweite Bildaufnahme können miteinander verglichen werden. Es können Änderungen zwischen der ersten und der zweiten Bildaufnahme ermittelt und/oder quantifiziert werden. Es kann sein, dass die Änderungen einen Einfluss darauf haben, ob die erste und/oder die zweite Bildaufnahme für einen Nutzer interessant und/oder relevant ist. Es ist z.B. möglich, dass die erste und/oder die zweite Bildaufnahme für einen Nutzer nur dann interessant und/oder relevant ist, wenn sich die Zahl (spezifischer) Gliederfüßer geändert hat. Es ist z.B. möglich, dass die erste und/oder die zweite Bildaufnahme für einen Nutzer nur dann interessant und/oder relevant ist, wenn die Zahl (spezifischer) Gliederfüßer im Lauf der Zeit zugenommen hat.

Entsprechen Änderungen zwischen der ersten und der zweiten Bildaufnahme nicht vordefinierten Kriterien, kann es sein, dass die erste und/oder die zweite Bildaufnahme als weniger relevant erachtet wird/werden, als wenn die Änderungen den vordefinierten Kriterien entsprechen würden. Die erste und/oder die zweite Bildaufnahme können verworfen werden. Die erste und/oder die zweite Bildaufnahme können (erheblich) reduziert werden. Die erste und/oder die zweite Bildaufnahme können verlustbehaftet komprimiert werden. Der mindestens eine Reduktionsparameter kann (a) angeben, dass die Größe der Bildaufnahme zu reduzieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel).

Entsprechen Änderungen zwischen der ersten und der zweiten Bildaufnahme vordefinierten Kriterien, kann es sein, dass die erste und/oder die zweite Bildaufnahme als interessant und/oder relevant erachtet wird/werden. Der mindestens eine Reduktionsparameter kann (a) angeben, dass die Bildaufnahme nicht oder nur wenig oder nur verlustfrei zu komprimieren ist, (b) eine oder mehrere Reduktionstechniken (z.B. Komprimierungstechniken/-algorithmen) angeben, mit der/denen die Bildaufnahme zu reduzieren ist, (c) Parameter der einen oder der mehreren Reduktionstechniken angeben (z.B. das Komprimierungslevel), (d) einen oder mehrere Teilbereiche angeben, bei denen die Bildauflösung und/oder Farbtiefe zu reduzieren ist, (e) einen oder mehrere Teilbereiche angeben, die wegzuschneiden oder zu maskieren sind.

Es ist auch möglich, auf Basis der ersten Bildaufnahme und der zweiten Bildaufnahme eine Bildaufnahme zu erzeugen, in der die Änderungen zwischen der ersten Bildaufnahme und der zweiten Bildaufnahme dargestellt sind. Zum Beispiel kann die erste Bildaufnahme Bildelement für Bildelement von der zweiten Bildaufnahme subtrahiert werden. Dabei betrifft die Subtraktion üblicherweise die Farbwerte bzw. Grauwerte der Bildelemente. Das Ergebnis der Subtraktion wird in dieser Offenbarung als Subtraktionsaufnahme bezeichnet. Es ist möglich, dass der reduzierte Datensatz eine Subtraktionsaufnahme umfasst.

Zu vii) Es können ein oder mehrere Gliederfüßer in dem abgebildeten Sammelbereich lokalisiert werden. Der Begriff "lokalisieren" bezieht sich auf die Bestimmung der Position eines Gliederfüßers in einer Bildaufnahme. Die Lokalisierung beantwortet die Frage, "wo" ein Gliederfüßer in einer Bildaufnahme zu finden ist. Der Begriff "lokalisieren" kann auch die Bestimmung einer Orientierung eines Gliederfüßers in der Bildaufnahme umfassen. Die Lokalisierung ist üblicherweise ein Schritt bei der Objekterkennung (s.o.). Die Lokalisierung kann z.B. durch Angabe eines Begrenzungsrahmens um den Gliederfüßer erfolgen.

Ein "Begrenzungsrahmen" (engl. *bounding box*) kann ein rechteckiger Rahmen sein, der durch die Koordinaten seiner Ecken definiert ist und ein Objekt von Interesse (z.B. einen (spezifischen) Gliederfüßer) in einem Bild umschließt. Der Begrenzungsrahmen ist durch seine Position gekennzeichnet, die in der Regel durch die Koordinaten der linken oberen Ecke (x₁, y₁) und der rechten unteren Ecke (x₂, y₂) oder alternativ durch die Koordinaten des Mittelpunkts (cx, cy) zusammen mit seiner Breite (w) und Höhe (h) angegeben wird. Der Begrenzungsrahmen dient als räumliche Darstellung, die den Umfang des Objekts abgrenzt und seine Identifizierung und/oder Analyse ermöglicht.

Begrenzungsrahmen werden häufig verwendet, um Objekte in Bildern zu markieren. Es sei darauf hingewiesen, dass ein Begrenzungsrahmen nicht unbedingt rechteckig sein muss; auch andere geometrische Formen eignen sich zur Markierung von Objekten, z. B. Kreise, Ellipsen, Sechsecke oder andere Formen. In dieser Hinsicht ist der Begriff "Begrenzungsrahmen" weit auszulegen und nicht auf rechteckige Rahmen beschränkt.

Alternativ oder zusätzlich zu einem Begrenzungsrahmen kann ein Gliederfüßer in einer Bildaufnahme auch farblich hervorgehoben werden. Denkbar ist auch, dass die Markierung dadurch erfolgt, dass Teile der Bildaufnahme, die keine Gliederfüßer enthalten, in einer anderen Farbe oder in Graustufen und/oder in reduzierter Helligkeit und/oder mit reduziertem Kontrast und/oder mit reduzierter Farbtiefe dargestellt werden, so dass die Gliederfüßer auf diese Weise gegenüber den anderen Teilen der Bildaufnahme hervorgehoben werden. Markierung kann auch das Hinzufügen eines Etiketts oder eines Indikators (z. B. eines Pfeils) bedeuten, der auf einen lokalisierten Gliederfüßer hinweist.

Es kann weitere/andere Möglichkeiten der Markierung geben. Die Markierung kann dazu dienen, einem Nutzer anzuzeigen, wo ein oder mehrere Gliederfüßer in der Bildaufnahme abgebildet sind und/oder welche Gliederfüßer in der Bildaufnahme abgebildet sind.

Es ist möglich, dass verschiedene Klassen von Gliederfüßern in der Bildaufnahme unterschiedlich markiert werden. Im Falle von Begrenzungsrahmen können diese zum Beispiel unterschiedliche Farben und/oder Ränder haben.

In einer Ausführungsform der vorliegenden Offenbarung ist die Auflösung und/oder Farbtiefe innerhalb eines Begrenzungsrahmens einer reduzierten Bildaufnahme höher als außerhalb des Begrenzungsrahmens, wobei der Begrenzungsrahmen die Position eines (spezifischen) Gliederfüßers anzeigt.

In einer Ausführungsform der vorliegenden Offenbarung wird eine empfangene Bildaufnahme auf die Bildelemente innerhalb eines Begrenzungsrahmens reduziert, wobei der Begrenzungsrahmen die Position eines (spezifischen) Gliederfüßers anzeigt. Mit anderen Worten: es wird der Inhalt des Begrenzungsrahmens (d.h. die innerhalb des Begrenzungsrahmens liegenden Bildelemente) extrahiert. Mit anderen Worten: es werden diejenigen Teilbereiche weggeschnitten oder maskiert, die außerhalb des Begrenzungsrahmens liegen.

In einer Ausführungsform der vorliegenden Offenbarung werden eine oder mehrere Gliederfüßer in der Bildaufnahme lokalisiert und die lokalisierten Gliederfüßer identifiziert (z.B., indem sie einer von mindestens zwei Klassen zugeordnet werden). Der reduzierte Datensatz kann die Koordinaten von dem einen oder den mehreren Gliederfüßern (Positionsinformation) und/oder eine Identitätsinformation umfassen, die angibt, um welchen Gliederfüßer es sich handelt.

Die Identitätsinformation kann die Art des Gliederfüßers angeben. Die Identitätsinformation kann angeben, ob es sich bei dem Gliederfüßer um einen Nützling, einen Schädling oder um einen neutralen Gliederfüßer handelt. Die Identitätsinformation kann angeben, ob der Gliederfüßer mit einem Pflanzenschutzmittel bekämpft werden kann und/oder mit welchem Pflanzenschutzmittel der Gliederfüßer bekämpft werden kann. Die Identitätsinformation kann angeben, mit welchem Pflanzenschutzmittel der Gliederfüßer nicht bekämpft werden kann.

In einem weiteren Schritt wird ein reduzierter Datensatz erzeugt. Der reduzierte Datensatz wird auf Basis der empfangenen Bildaufnahme erzeugt. Wurden mehrere Bildaufnahmen empfangen, so ist es möglich, dass für jede Bildaufnahme ein reduzierter Datensatz erzeugt wird. Ebenso ist es möglich, dass mehrere empfangene Bildaufnahmen zu einem reduzierten Datensatz kombiniert werden.

Das Erzeugen der reduzierten Bildaufnahme erfolgt unter Verwendung des einen oder der mehreren Reduktionsparameter. Mit anderen Worten werden empfangene Bildaufnahmen so reduziert, wie es durch den einen oder die mehreren Reduktionsparameter spezifiziert wird.

Gibt der mindestens eine Reduktionsparameter beispielsweise an, dass eine empfange Bildaufnahme reduziert wird, wird die empfangene Bildaufnahme reduziert und das Ergebnis ist eine reduzierte Bildaufnahme. Dabei kann die Reduktionstechnik eine (z.B. von einem Nutzer) vordefinierte Reduktionstechnik sein.

Gibt der mindestens eine Reduktionsparameter beispielsweise an, wie eine empfange Bildaufnahme reduziert wird (z.B. durch Verringern der Auflösung, Verringern der Farbtiefe, Wegschneiden von Teilbereichen, Kompression), wird die empfangene Bildaufnahme so reduziert, wie von dem mindestens einen Reduktionsparameter angegeben. Das Ergebnis ist eine reduzierte Bildaufnahme.

In einer Ausführungsform der vorliegenden Offenbarung umfasst der reduzierte Datensatz eine reduzierte Bildaufnahme, wobei die reduzierte Bildaufnahme durch Reduktion der empfangenen Bildaufnahme erzeugt wird.

In einer Ausführungsform der vorliegenden Offenbarung umfasst der reduzierte Datensatz eine Positionsinformation, wobei die Positionsinformation angibt, an welcher Position der empfangenen Bildaufnahme ein Gliederfüßer abgebildet ist.

In einer Ausfuhrungsform der vorliegenden Offenbarung umfasst der reduzierte Datensatz eine Positionsinformation, wobei die Positionsinformation angibt, an welcher Position der empfangenen Bildaufnahme ein spezifischer Gliederfüßer abgebildet ist.

In einer Ausführungsform der vorliegenden Offenbarung umfasst der reduzierte Datensatz eine Orientierungsinformation, wobei die Orientierungsinformation angibt, wie der in der empfangenen Bildaufnahme abgebildete Gliederfüßer orientiert ist, d.h., z.B. wie eine Körperachse in Bezug zu Begrenzungen der empfangenen Bildaufnahme und/oder Merkmalen des Sammelbereich orientiert (ausgerichtet) ist.

In einer Ausführungsform der vorliegenden Offenbarung umfasst der reduzierte Datensatz eine Identitätsinformation, wobei die Identitätsinformation angibt, was für ein Gliederfüßer in der empfangenen Bildaufnahme abgebildet ist.

In einer Ausführungsform der vorliegenden Offenbarung umfasst der reduzierte Datensatz eine Entwicklungsinformation, wobei die Entwicklungsinformation angibt, in welchem Entwicklungsstadium sich der in der empfangenen Bildaufnahme abgebildete Gliederfüßer befindet.

In einer Ausführungsform der vorliegenden Offenbarung umfasst der reduzierte Datensatz eine Größeninformation, wobei die Größeninformation angibt, wie groß der in der empfangenen Bildaufnahme abgebildete Gliederfüßer ist.

In einer Ausführungsform der vorliegenden Offenbarung umfasst der reduzierte Datensatz eine Mengeninformation, wobei die Mengeninformation angibt, wie viele Gliederfüßer in der empfangenen Bildaufnahme abgebildet sind.

In einer Ausführungsform der vorliegenden Offenbarung umfasst der reduzierte Datensatz eine Mengeninformation, wobei die Mengeninformation angibt, wie viele spezifische Gliederfüßer (d.h. Gliederfüßer einer spezifischen Klasse) in der empfangenen Bildaufnahme abgebildet sind.

In einer Ausführungsform der vorliegenden Offenbarung umfasst der reduzierte Datensatz eine komprimierte Bildaufnahme, wobei die komprimierte Bildaufnahme durch Kompression der empfangenen Bildaufnahme erzeugt wird.

In einer Ausführungsform der vorliegenden Offenbarung umfasst der reduzierte Datensatz eine reduzierte Bildaufnahme, wobei die reduzierte Bildaufnahme eine geringere Auflösung und/oder Farbtiefe aufweist als die empfangene Bildaufnahme.

In einer Ausführungsform der vorliegenden Offenbarung umfasst der reduzierte Datensatz eine reduzierte Bildaufnahme, wobei die reduzierte Bildaufnahme einen oder mehrere Teilbereiche umfasst, in denen die Auflösung und/oder Farbtiefe geringer ist als in der empfangenen Bildaufnahme, wobei der eine oder die mehreren Teilbereiche keinen Gliederfüßer umfasst/umfassen.

In einer Ausführungsform der vorliegenden Offenbarung umfasst der reduzierte Datensatz eine reduzierte Bildaufnahme, wobei die reduzierte Bildaufnahme einen oder mehrere Teilbereiche umfasst, in denen die Auflösung und/oder Farbtiefe geringer ist als in der empfangenen Bildaufnahme, wobei der eine oder die mehreren Teilbereiche keinen spezifischen Gliederfüßer umfassen.

In einer Ausführungsform der vorliegenden Offenbarung umfasst der reduzierte Datensatz eine reduzierte Bildaufnahme, wobei die reduzierte Bildaufnahme durch Subtrahieren einer ersten Bildaufnahme von einer zweiten Bildaufnahme erzeugt wird, wobei die erste Bildaufnahme den Sammelbereich zu einem ersten Zeitpunkt repräsentiert und die zweite Bildaufnahme den Sammelbereich zu einem zweiten Zeitpunkt repräsentiert, wobei der zweite Zeitpunkt zeitlich dem ersten Zeitpunkt nachgelagert (d.h. später) ist.

In einer Ausführungsform der vorliegenden Offenbarung umfasst der reduzierte Datensatz eine Änderungsinformation, wobei die Änderungsinformation angibt, ob und/oder welche Änderungen zwischen einer ersten Bildaufnahme und einer zweiten Bildaufnahme vorliegen, wobei die erste Bildaufnahme den Sammelbereich zu einem ersten Zeitpunkt repräsentiert und die zweite Bildaufnahme den Sammelbereich zu einem zweiten Zeitpunkt repräsentiert, wobei der zweite Zeitpunkt zeitlich dem ersten Zeitpunkt nachgelagert (d.h. später) ist.

In einer Ausführungsform der vorliegenden Offenbarung umfasst der reduzierte Datensatz entweder eine erste Bildaufnahme oder eine zweite Bildaufnahme, wobei die erste Bildaufnahme eine reduzierte Bildaufnahme sein kann und die zweite Bildaufnahme eine reduzierte Bildaufnahme sein kann, wobei die erste Bildaufnahme den Sammelbereich zu einem ersten Zeitpunkt repräsentiert und die zweite Bildaufnahme den Sammelbereich zu einem zweiten Zeitpunkt repräsentiert, wobei der zweite Zeitpunkt zeitlich dem ersten Zeitpunkt nachgelagert (d.h. später) ist.

Der reduzierte Datensatz kann in einem Datenspeicher gespeichert werden. Der Datenspeicher kann ein Bestandteil der Vorrichtung der vorliegenden Offenbarung sein. Der Datenspeicher kann mit der Vorrichtung der vorliegenden Offenbarung (z.B. über ein Netzwerk) verbunden sein.

Der reduzierte Datensatz kann an ein separates Computersystem (z.B. über ein Netzwerk) übermittelt werden.

Umfasst der reduzierte Datensatz eine reduzierte Bildaufnahme, kann die reduzierte Bildaufnahme gegenüber einem Nutzer ausgegeben werden. Die reduzierte Bildaufnahme kann z.B. auf einem Monitor angezeigt und/oder mit einem Drucker ausgedruckt werden.

Die reduzierte Bildaufnahme kann weiter analysiert werden. Wurde beispielsweise beim Ermitteln des einen oder der mehreren Reduktionsparameter lediglich untersucht, ob ein Gliederfüßer in dem Sammelbereich vorhanden ist, kann die reduzierte Bildaufnahme verwendet werden, um einen oder mehrere in dem Sammelbereich vorhandene Gliederfüßer zu identifizieren. Die in der reduzierten Bildaufnahme abgebildeten Gliederfüßer können gezählt werden. Es kann die Anzahl an spezifischen, in der reduzierten Bildaufnahme abgebildeten Gliederfüßern ermittelt werden.

Umfasst der reduzierte Datensatz eine Positionsinformation und eine Identitätsinformation, kann auf Basis dieser Informationen eine synthetische Bildaufnahme erzeugt werden. Die Positionsinformation gibt an, an welcher Position der empfangenen Bildaufnahme ein Gliederfüßer abgebildet ist. Die Identitätsinformation gibt an, was für ein Gliederfüßer in der empfangenen Bildaufnahme abgebildet ist. Die synthetische Bildaufnahme kann eine synthetische Repräsentation des Sammelbereich sein, in der an der Position, die durch die Positionsinformation definiert ist, ein Gliederfüßer einer definierten Gruppe (z.B. Unterklasse, Überordnung, Ordnung, Unterordnung, Familie, Gattung, Art, Stadium), die durch die Identitätsinformation definiert ist, dargestellt ist. Umfasst der reduzierte Datensatz eine Entwicklungsinformation und/oder eine Größeninformation und/oder eine Orientierungsinformation können solche Informationen zur Darstellung des Gliederfüßers in der synthetischen Bildaufnahme berücksichtigt werden. Die synthetische Bildaufnahme kann beispielsweise dadurch erzeugt werden, dass ein Bild des entsprechenden Gliederfüßers an der entsprechenden Position der synthetischen Bildaufnahme eingefügt wird. Die synthetische Bildaufnahme kann beispielsweise dadurch erzeugt werden, dass Informationen wie beispielsweise die Positionsinformation, die Identitätsinformation, die Größeninformation, die Entwicklungsinformation und/oder die Orientierungsinformation als Eingabedaten in ein bedingtes generatives Modell eingegeben wird, das trainiert wurde, auf Basis solcher Eingabedaten eine synthetische Bildaufnahme zu erzeugen. Solche bedingten generativen Modelle (engl. *Conditional Generative Model*) sind im Stand der Technik beschrieben (siehe z.B. R. Rombach et al.: High-Resolution Image Synthesis with Latent Diffusion Models, arXiv:2112.10752v2; J. Ho et al.: Denoising Diffusion Probabilistic Models, arXiv:2006.11239v2; K. Preechakul et al.: Diffusion autoencoders: Toward a meaningful and decodable representation, arXiv:2111.15640v3; P. Dhariwal, A. Nichol: "Diffusion models beat GANs on image synthesis," arXiv:2105.05233v4).

Das Erzeugen einer synthetischen Bildaufnahme hat den Vorteil, dass im Vergleich zur empfangenen Bildaufnahme nur eine kleine Datenmenge (z.B. Positionsinformation und Identitätsinformation) an ein separates Computersystem übermittelt werden muss. Auf dem separaten Computersystem kann dann auf Basis der übertragenen Informationen eine synthetische Bildaufnahme erzeugt werden, die die für einen Nutzer relevanten und/oder interessanten Informationen in visueller Form repräsentiert, die auch durch die empfangene Bildaufnahme repräsentiert werden: *welcher* Gliederfüßer ist wo im Sammelbereich vorhanden. Mit anderen Worten: anstelle der empfangenen Bildaufnahme oder einer auf Basis der empfangenen Bildaufnahme reduzierten Bildaufnahme werden nur diejenigen Informationen übermittelt, die für einen Nutzer relevant und/oder interessant sind; anhand dieser Informationen wird dann eine synthetische Bildaufnahme und damit visuelle Repräsentation dieser Informationen erzeugt, die einem Nutzer die Informationen visuell zur Verfügung stellt.

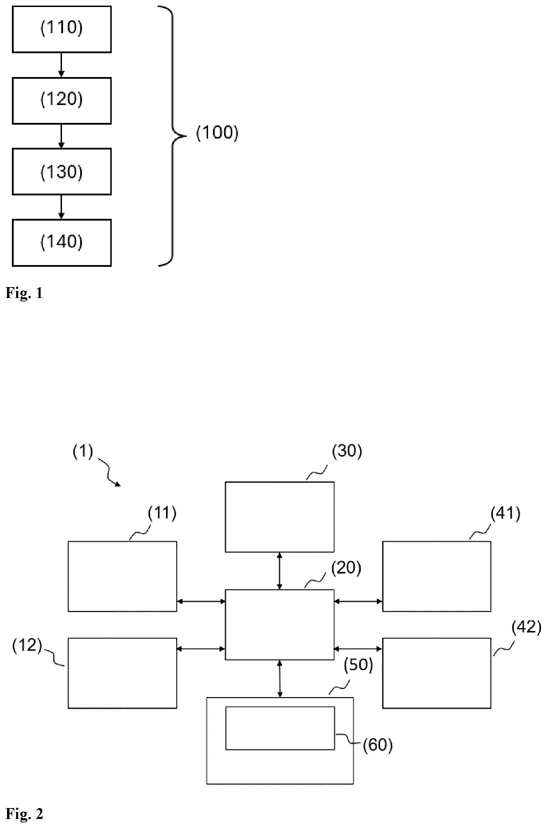

Fig. 1 zeigt beispielhaft und schematisch eine Ausführungsform des computer-implementierten Verfahrens der vorliegenden Offenbarung in Form eines Ablaufschemas.

Das Verfahren (100) umfasst die Schritte:
(110) Empfangen einer Bildaufnahme, wobei in der Bildaufnahme ein Sammelbereich abgebildet ist,
(120) Bestimmen eines oder mehrerer Reduktionsparameter auf Basis des in der Bildaufnahme abgebildeten Sammelbereichs,
(130) Erzeugen eines reduzierten Datensatzes unter Verwendung des einen oder der mehreren Reduktionsparameter,
(140) Speichern des reduzierten Datensatzes und/oder Übermitteln des reduzierten Datensatzes an ein separates Computersystem.

Ein weiterer Gegenstand der vorliegenden Erfindung ist eine Vorrichtung. Fig. 2 zeigt beispielhaft und schematisch eine Ausführungsform einer solchen Vorrichtung.

Die Vorrichtung (1) umfasst eine Verarbeitungseinheit (20) (engl. *processing unit*) und einen Speicher (50).

Die Verarbeitungseinheit (20) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die im Speicher (50) gespeichert sein können.

Der Speicher (50) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher oder eine Kombination der oben genannten.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Kamera, anderen Computersystemen, Netzwerken, Datenspeichern oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) umfassen. Eine Anzeige (30) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen (11, 12) sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und/oder Kameras und dergleichen umfassen.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

Die Vorrichtung kann ein Computersystem in Form eines Laptops, Notebooks, Netbooks und/der Tablet-PCs oder Smartphones sein oder ein solches umfassen; die Vorrichtung kann auch ein Bestandteil einer Kamera sein. Ebenso können eine oder mehrere Kameras Bestandteil der Vorrichtung sein.

Die Vorrichtung weist üblicherweise eine Energieversorgungeinheit auf, mit der die Vorrichtung mit Energie versorgt werden kann.

Die Vorrichtung ist üblicherweise für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemischen Zellen, Akkumulatoren, Solarzellen, Brennstoffzellen und/oder Generatoren (z.B. in Kombination mit einem Windrad).

Die Vorrichtung kann so ausgestaltet sein, dass es elektrische Energie aus der Umgebung der Vorrichtung gewinnt. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und durch die Vorrichtung genutzt oder "geerntet" werden. Diese Art der elektrischen Energieerzeugung ist als Energy Harvesting bekannt. Mit Energy Harvesting werden im Bereich der Elektronik Verfahren bezeichnet, mit denen kleinste Mengen frei verfügbarer Energie aus der Umgebung gewonnen und gespeichert werden können. Diese Technik ermöglicht es, eine Vorrichtung während ihrer gesamten Lebensdauer mit Energie zu versorgen. Energy Harvesting Systeme umfassen üblicherweise einen Energiewandler, eine Energiemanagementeinheit mit einem Energiespeicher, der üblicherweise ein Kondensator ist. Der Energiewandler, auch Mikrogenerator genannt, wandelt Energie aus der Umgebung in elektrische Energie um. Für die Umwandlung können beispielsweise der piezoelektrische Effekt, der thermoelektrische Effekt oder der photoelektrische Effekt genutzt werden. Weitere Details sind im Stand der Technik beschrieben (siehe z.B. http://www.harvesting-energy.de/ und die dort aufgeführten Publikationen).

In einer Ausführungsform umfasst die Vorrichtung eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

In einer Ausfuhrungsform der vorliegenden Offenbarung umfasst die Vorrichtung eine Fangvorrichtung für Gliederfüßer oder spezifische Gliederfüßer. In einer Ausführungsform der vorliegenden Offenbarung umfasst die Fangvorrichtung den Sammelbereich. In einer Ausführungsform der vorliegenden Offenbarung umfasst die Vorrichtung eine Kamera. In einer Ausführungsform der vorliegenden Offenbarung umfasst die Kamera mindestens einen Kamerasensor auf den der Sammelbereich (z.B. durch eine Kameraoptik, die ein Bestandteil der Vorrichtung sein kann) abgebildet wird.

Die Vorrichtung der vorliegenden Offenbarung ist konfiguriert,
- eine Bildaufnahme zu empfangen, wobei in der Bildaufnahme ein Sammelbereich abgebildet ist,
- einen oder mehrere Reduktionsparameter auf Basis des in der Bildaufnahme abgebildeten Sammelbereichs zu bestimmen,
- einen reduzierten Datensatz unter Verwendung des einen oder der mehreren Reduktionsparameter zu erzeugen,
- den reduzierten Datensatz zu speichern und/oder an ein separates Computersystem zu übermitteln.

Zur Abbildung des Sammelbereichs auf einem oder mehreren Bildsensoren einer oder mehrerer Kameras ist eine Lichtquelle erforderlich, mit der der Sammelbereich beleuchtet wird, so dass Licht (elektromagnetische Strahlung im infraroten, sichtbaren und/oder ultravioletten Bereich des Spektrums) vom beleuchteten Sammelbereich in Richtung Kamera gestreut/reflektiert wird. Hierzu kann das Tageslicht verwendet werden. Es ist aber auch denkbar, eine Beleuchtungseinheit zu verwenden, die für eine definierte, vom Tageslicht unabhängige Beleuchtung sorgt. Diese ist vorzugsweise seitlich neben der Kamera angebracht, so dass es zu keinem Schattenwurf der Kamera auf den Sammelbereich kommt.

Die Beleuchtungsquelle kann ein Bestandteil der Kamera und/oder der Vorrichtung sein.

Es ist auch denkbar, eine Beleuchtungsquelle unterhalb des Sammelbereichs und/oder neben dem Sammelbereich zu positionieren, die den Sammelbereich "von unten" und/oder "von der Seite" beleuchtet, während eine Kamera eine oder mehrere Bildaufnahmen "von oben" erzeugt.

Es denkbar, dass mehrere Beleuchtungsquellen den Sammelbereich aus unterschiedlichen Richtungen beleuchten.

Der Begriff "Licht" und "Beleuchtung" soll im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) oder oberhalb von 780 nm (infrarotes Licht: 780 nm bis 1000 µm) verwendet wird. Der Bildsensor und die optischen Elemente sind üblicherweise an die verwendete elektromagnetische Strahlung angepasst.

Die Vorrichtung kann eine Sendeeinheit umfassen, um Informationen über ein Netzwerk an ein separates Computersystem zu übermitteln. Diese Informationen können beispielsweise Bildaufnahmen des Sammelbereichs sein. Diese Informationen können Ergebnisse einer Analyse einer Bildaufnahme sein, zum Beispiel die Zahl der in einer Bildaufnahme abgebildeten Gliederfüßer, identifizierte Spezies und/oder Mitteilungen zum Status der Vorrichtung.

Die Sendeeinheit kann so ausgestaltet sein, dass sie Informationen über ein Mobilfunknetz (z.B. GSM: *Global System for Mobile Communications,* GPRS: *General Packet Radio Service;* UMTS: *Universal Mobile Telecommunications System,* LTE: *Long Term Evolution*)*,* über ein WLAN (*Wireless Local Artea Network*)*,* über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Gegenstand der vorliegenden Erfindung ist auch ein Computerprogramm. Ein solches Computerprogramm kann auf einem nichtflüchtigen Datenträger wie beispielsweise einer CD, einer DVD, einem USB-Stick oder einem anderen Medium zum Speichern von Daten gespeichert sein.

Das Computerprogramm kann in einem App-Store und/oder auf einer Webseite des Internets zum Herunterladen angeboten werden.

Das Computerprogramm kann in den Speicher der Vorrichtung der vorliegenden Offenbarung geladen werden und/oder dort bereits gespeichert sein und die Vorrichtung dazu veranlassen, folgende Schritte ausführen:
- Empfangen einer Bildaufnahme, wobei in der Bildaufnahme ein Sammelbereich abgebildet ist,
- Bestimmen eines oder mehrerer Reduktionsparameter auf Basis des in der Bildaufnahme abgebildeten Sammelbereichs,
- Erzeugen eines reduzierten Datensatzes unter Verwendung des einen oder der mehreren Reduktionsparameter,
- Speichern des reduzierten Datensatzes und/oder Übermitteln des reduzierten Datensatzes an ein separates Computersystem.

## Patentansprüche

1. Computer-implementiertes Verfahren umfassend die Schritte:
- Empfangen einer Bildaufnahme, wobei in der Bildaufnahme ein Sammelbereich abgebildet ist,
- Bestimmen eines oder mehrerer Reduktionsparameter auf Basis des in der Bildaufnahme abgebildeten Sammelbereichs,
- Erzeugen eines reduzierten Datensatzes unter Verwendung des einen oder der mehreren Reduktionsparameter,
- Speichern des reduzierten Datensatzes und/oder Übermitteln des reduzierten Datensatzes an ein separates Computersystem.

2. Verfahren gemäß Anspruch 1, wobei der Reduktionsparameter angibt, wie auf Basis der empfangenen Bildaufnahme ein reduzierter Datensatz erzeugt wird.

3. Verfahren gemäß Anspruch 1 oder 2, wobei der reduzierte Datensatz eine geringere Datenmenge umfasst als die empfangene Bildaufnahme.

4. Verfahren gemäß einem der Ansprüche 1 bis 3, wobei der reduzierte Datensatz eine reduzierte Bildaufnahme umfasst, wobei die reduzierte Bildaufnahme eine geringere Datenmenge umfasst als die empfangene Bildaufnahme.

5. Verfahren gemäß Anspruch 4, wobei der Reduktionsparameter angibt, wie auf Basis der empfangenen Bildaufnahme eine reduzierte Bildaufnahme erzeugt wird.

6. Verfahren gemäß einem der Ansprüche 1 bis 5, wobei das Bestimmen des einen oder der mehreren Reduktionsparameter umfasst:
- Prüfen der Anwesenheit mindestens eines Gliederfüßers in dem abgebildeten Sammelbereich, und/oder
- Prüfen der Anwesenheit mindestens eines spezifischen Gliederfüßers in dem abgebildeten Sammelbereich, und/oder
- Identifizieren eines oder mehrerer Gliederfüßer in dem abgebildeten Sammelbereich, und/oder
- Zählen von Gliederfüßern in dem abgebildeten Sammelbereich, und/oder
- Bestimmen des Entwicklungsstadiums eines oder mehrerer Gliederfüßer in dem abgebildeten Sammelbereich, und/oder
- Bestimmen der Größe eines oder mehrerer Gliederfüßer in dem abgebildeten Sammelbereich, und/oder
- Vergleichen einer ersten empfangenen Bildaufnahme mit einer zweiten empfangenen Bildaufnahme, wobei die erste empfangene Bildaufnahme und die zweite empfangene Bildaufnahme den Sammelbereich zu unterschiedlichen Zeitpunkten zeigen, und/oder
- Lokalisieren eines oder mehrerer Gliederfüßer in dem abgebildeten Sammelbereich und/oder der empfangenen Bildaufnahme.

7. Verfahren gemäß einem der Ansprüche 1 bis 6,
wobei das Bestimmen des einen oder der mehreren Reduktionsparameter umfasst:
- Prüfen der Anwesenheit mindestens eines Gliederfüßers in dem abgebildeten Sammelbereich,
- Feststellen, dass in der empfangenen Bildaufnahme kein Gliederfüßer abgebildet ist,
- Festlegen des Reduktionsparameters, wobei der Reduktionsparameter angibt, wie und/oder in welchem Umfang die empfangene Bildaufnahme reduziert wird,
wobei das Erzeugen des reduzierten Datensatzes umfasst:
- Erzeugen einer reduzierten Bildaufnahme auf Basis der empfangenen Bildaufnahme gemäß Reduktionsparameter.

8. Verfahren gemäß einem der Ansprüche 1 bis 7,
wobei das Bestimmen des einen oder der mehreren Reduktionsparameter umfasst:
- Prüfen der Anwesenheit mindestens eines spezifischen Gliederfüßers in dem abgebildeten Sammelbereich,
- Feststellen, dass in der empfangenen Bildaufnahme kein spezifischer Gliederfüßer abgebildet ist,
- Festlegen des Reduktionsparameters, wobei der Reduktionsparameter angibt, wie und/oder in welchem Umfang die empfangene Bildaufnahme reduziert wird,
wobei das Erzeugen des reduzierten Datensatzes umfasst:
- Erzeugen einer reduzierten Bildaufnahme auf Basis der empfangenen Bildaufnahme gemäß Reduktionsparameter.

9. Verfahren gemäß einem der Ansprüche 1 bis 8,
wobei das Bestimmen des einen oder der mehreren Reduktionsparameter umfasst:
- Prüfen der Anwesenheit mindestens eines Gliederfüßers in dem abgebildeten Sammelbereich,
- Feststellen, dass in der empfangenen Bildaufnahme mindestens ein Gliederfüßer abgebildet ist,
- Lokalisieren des mindestens einen Gliederfüßers in der empfangenen Bildaufnahme,
- Festlegen eines oder mehrerer Teilbereiche in der empfangenen Bildaufnahme, wobei der eine oder die mehreren Teilbereiche den mindestens einen Gliederfüßer umfassen,
wobei das Erzeugen des reduzierten Datensatzes umfasst:
- Erzeugen einer reduzierten Bildaufnahme auf Basis der empfangenen Bildaufnahme, wobei das Erzeugen der reduzierten Bildaufnahme ein Extrahieren des einen oder der mehreren festgelegten Teilbereiche oder ein Wegschneiden oder ein Maskieren von anderen Teilbereichen, die nicht dem einen oder den mehreren festgelegten Teilbereiche entsprechen, umfasst.

10. Verfahren gemäß einem der Ansprüche 1 bis 9,
wobei das Bestimmen des einen oder der mehreren Reduktionsparameter umfasst:
- Prüfen der Anwesenheit mindestens eines Gliederfüßers in dem abgebildeten Sammelbereich,
- Feststellen, dass in der empfangenen Bildaufnahme mindestens ein Gliederfüßer abgebildet ist,
- Lokalisieren des mindestens einen Gliederfüßers in der empfangenen Bildaufnahme,
- Festlegen eines oder mehrerer Teilbereiche in der empfangenen Bildaufnahme, wobei der eine oder die mehreren Teilbereiche den mindestens einen Gliederfüßer nicht umfassen,
wobei das Erzeugen des reduzierten Datensatzes umfasst:
- Erzeugen einer reduzierten Bildaufnahme auf Basis der empfangenen Bildaufnahme, wobei das Erzeugen der reduzierten Bildaufnahme ein Reduzieren der Auflösung und/oder Farbtiefe in dem einen oder den mehreren festgelegten Teilbereichen umfasst.

11. Verfahren gemäß einem der Ansprüche 1 bis 10,
wobei das Erzeugen eines reduzierten Datensatzes umfasst:
- Reduzieren der Auflösung der empfangenen Bildaufnahme zumindest in einem Teilbereich, wobei der Reduktionsparameter angibt, wie die Auflösung reduziert wird und/oder in welchem Umfang die Auflösung reduziert wird und/oder in welchem Teilbereich die Auflösung reduziert wird, und/oder
- Reduzieren der Farbtiefe der empfangenen Bildaufnahme zumindest in einem Teilbereich, wobei der Reduktionsparameter angibt, wie die Farbtiefe reduziert wird und/oder in welchem Umfang die Farbtiefe reduziert wird und/oder in welchem Teilbereich die Farbtiefe reduziert wird
wobei das Erzeugen eines reduzierten Datensatzes umfasst:
- Wegschneiden und/oder Maskieren und/oder Extrahieren eines oder mehrerer Teilbereiche der empfangenen Bildaufnahme, wobei der Reduktionsparameter angibt, welcher Teilbereiche oder welche Teilbereiche weggeschnitten, maskiert und/oder extrahiert werden, und/oder
- Komprimieren zumindest eines Teilbereichs der empfangenen Bildaufnahme, wobei der Reduktionsparameter angibt, wie komprimiert wird und/oder in welchem Umfang komprimiert wird und/oder welcher Teilbereich komprimiert wird.

12. Verfahren gemäß einem der Ansprüche 1 bis 11,
wobei der reduzierte Datensatz eine reduzierte Bildaufnahme umfasst, wobei die reduzierte Bildaufnahme zumindest in einem Teilbereich eine geringere Auflösung aufweist als die empfangene Bildaufnahme, wobei der Reduktionsparameter angibt, wie die Auflösung reduziert wird und/oder in welchem Umfang die Auflösung reduziert wird und/oder in welchem Teilbereich die Auflösung reduziert wir, und/oder
wobei der reduzierte Datensatz eine reduzierte Bildaufnahme umfasst, wobei die reduzierte Bildaufnahme zumindest in einem Teilbereich eine geringere Farbtiefe aufweist als die empfangene Bildaufnahme, wobei der Reduktionsparameter angibt, wie die Farbtiefe reduziert wird und/oder in welchem Umfang die Farbtiefe reduziert wird und/oder in welchem Teilbereich die Farbtiefe reduziert wird, und/der
wobei der reduzierte Datensatz eine reduzierte Bildaufnahme umfasst, wobei die reduzierte Bildaufnahme durch Wegschneiden und/oder Maskieren und/oder Extrahieren eines oder mehrerer Teilbereiche der empfangenen Bildaufnahme erzeugt wird, wobei der Reduktionsparameter angibt, welcher Teilbereiche oder welche Teilbereiche weggeschnitten, maskiert und/oder extrahiert werden. und/oder
wobei der reduzierte Datensatz eine komprimierte Bildaufnahme umfasst, wobei die komprimierte Bildaufnahme durch Kompression der empfangenen Bildaufnahme erzeugt wird, und/oder
wobei der reduzierte Datensatz eine Positionsinformation umfasst, wobei die Positionsinformation angibt, an welcher Position der empfangenen Bildaufnahme ein Gliederfüßer abgebildet ist, und/oder
wobei der reduzierte Datensatz eine Orientierungsinformation umfasst, wobei die Orientierungsinformation angibt, wie ein in der empfangenen Bildaufnahme abgebildeter Gliederfüßer orientiert ist, und/oder
wobei der reduzierte Datensatz eine Identitätsinformation umfasst, wobei die Identitätsinformation angibt, was für ein Gliederfüßer in der empfangenen Bildaufnahme abgebildet ist, und/oder
wobei der reduzierte Datensatz eine Entwicklungsinformation umfasst, wobei die Entwicklungsinformation angibt, in welchem Entwicklungsstadium sich ein in der empfangenen Bildaufnahme abgebildeter Gliederfüßer befindet, und/oder
wobei der reduzierte Datensatz eine Größeninformation umfasst, wobei die wobei die Größeninformation angibt, wie groß ein in der empfangenen Bildaufnahme abgebildeter Gliederfüßer ist, und/oder
wobei der reduzierte Datensatz eine Mengeninformation umfasst, wobei die Mengeninformation angibt, wie viele Gliederfüßer in der empfangenen Bildaufnahme abgebildet sind, und/oder
wobei der reduzierte Datensatz eine Änderungsinformation umfasst, wobei die Änderungsinformation angibt, ob und/oder welche Änderungen zwischen einer ersten empfangenen Bildaufnahme und einer zweiten empfangenen Bildaufnahme vorliegen, wobei die erste empfangene Bildaufnahme den Sammelbereich zu einem ersten Zeitpunkt repräsentiert und die zweite empfangene Bildaufnahme den Sammelbereich zu einem zweiten Zeitpunkt repräsentiert, wobei der zweite Zeitpunkt zeitlich dem ersten Zeitpunkt nachgelagert ist,
wobei der reduzierte Datensatz entweder eine erste Bildaufnahme oder eine zweite Bildaufnahme umfasst, wobei die erste Bildaufnahme auf Basis einer ersten empfangenen Bildaufnahme erzeugt wird oder dieser entspricht und die zweite Bildaufnahme auf Basis einer zweiten empfangenen Bildaufnahme erzeugt wird oder dieser entspricht, wobei die erste empfangene Bildaufnahme den Sammelbereich zu einem ersten Zeitpunkt repräsentiert und die zweite empfangene Bildaufnahme den Sammelbereich zu einem zweiten Zeitpunkt repräsentiert, wobei der zweite Zeitpunkt zeitlich dem ersten Zeitpunkt nachgelagert ist.

13. Verfahren gemäß einem der Ansprüche 1 bis 12,
wobei der reduzierte Datensatz eine reduzierte Bildaufnahme umfasst, wobei das Verfahren ferner umfasst:
- Ausgeben der reduzierten Bildaufnahme.

14. Verfahren gemäß einem der Ansprüche 1 bis 13,
wobei das Bestimmen des einen oder der mehreren Reduktionsparameter umfasst:
- Prüfen der Anwesenheit eines Gliederfüßers in dem abgebildeten Sammelbereich,
- Feststellen, dass in der empfangenen Bildaufnahme ein Gliederfüßer abgebildet ist,
- Lokalisieren des Gliederfüßers in der empfangenen Bildaufnahme,
wobei der reduzierte Datensatz eine Positionsinformation umfasst, wobei die Positionsinformation angibt, an welcher Position der empfangenen Bildaufnahme der Gliederfüßer abgebildet ist,
wobei der reduzierte Datensatz eine Identitätsinformation umfasst, wobei die Identitätsinformation angibt, was für ein Gliederfüßer in der empfangenen Bildaufnahme abgebildet ist,
wobei das Verfahren ferner umfasst:
- Erzeugen einer synthetischen Bildaufnahme auf Basis der Positionsinformation und der Identitätsinformation.

15. Verfahren gemäß einem der Ansprüche 1 bis 14,
wobei der reduzierte Datensatz eine reduzierte Bildaufnahme umfasst,
wobei das Empfangen der Bildaufnahme umfasst:
- Empfangen einer ersten Bildaufnahme und einer zweiten Bildaufnahme, wobei die erste Bildaufnahme den Sammelbereich zu einem ersten Zeitpunkt repräsentiert, wobei die zweite Bildaufnahme den Sammelbereich zu einem zweiten Zeitpunkt repräsentiert,
wobei das Bestimmen des einen oder der mehreren Reduktionsparameter umfasst:
- Bestimmen einer Änderung zwischen der ersten Bildaufnahme und der zweiten Bildaufnahme,
- Feststellen, dass die Änderung einem vordefinierten Kriterium entspricht,
- Festlegen des Reduktionsparameters, wobei der Reduktionsparameter angibt, ob die reduzierte Bildaufnahme nur auf Basis der ersten Bildaufnahme erzeugt wird oder ob die reduzierte Bildaufnahme nur auf Basis der zweiten Bildaufnahme erzeugt wird oder ob die reduzierte Bildaufnahme auf Basis der ersten Bildaufnahme und der zweiten Bildaufnahme erzeugt wird.

16. Verfahren gemäß einem der Ansprüche 1 bis 15,
wobei der reduzierte Datensatz eine reduzierte Bildaufnahme umfasst,
wobei das Empfangen der Bildaufnahme umfasst:
- Empfangen einer ersten Bildaufnahme und einer zweiten Bildaufnahme, wobei die erste Bildaufnahme den Sammelbereich zu einem ersten Zeitpunkt repräsentiert, wobei die zweite Bildaufnahme den Sammelbereich zu einem zweiten Zeitpunkt repräsentiert, wobei der zweite Zeitpunkt dem ersten Zeitpunkt zeitlich nachgelagert ist,
wobei das Bestimmen des einen oder der mehreren Reduktionsparameter umfasst:
- Ermitteln einer ersten Zahl an Gliederfüßern in der ersten Bildaufnahme,
- Ermitteln einer zweiten Zahl an Gliederfüßern in der zweiten Bildaufnahme,
- Feststellen, dass die erste Zahl und die zweite Zahl gleich sind oder die absolute Differenz zwischen der ersten Zahl und der zweiten Zahl kleiner als ein vorgegebener Schwellenwert ist, wobei das Erzeugen des reduzierten Datensatzes umfasst:
- Erzeugen einer reduzierten Bildaufnahme nur auf Basis der ersten Bildaufnahme oder nur auf Basis der zweiten Bildaufnahme.

17. Verfahren gemäß einem der Ansprüche 1 bis 15, wobei der Sammelbereich Teil einer Fangvorrichtung für Gliederfüßer ist.

18. Vorrichtung umfassend eine Verarbeitungseinheit und einen Speicher, wobei in dem Speicher ein Computerprogramm gespeichert ist, das die Vorrichtung veranlasst folgendes auszuführen:
- Empfangen einer Bildaufnahme, wobei in der Bildaufnahme ein Sammelbereich abgebildet ist,
- Bestimmen eines oder mehrerer Reduktionsparameter auf Basis des in der Bildaufnahme abgebildeten Sammelbereichs,
- Erzeugen eines reduzierten Datensatzes unter Verwendung des einen oder der mehreren Reduktionsparameter,
- Speichern des reduzierten Datensatzes und/oder Übermitteln des reduzierten Datensatzes an ein separates Computersystem.

19. Vorrichtung gemäß Anspruch 18, wobei die Vorrichtung eine Kamera zum Erzeugen der Bildaufnahme umfasst.

20. Nicht-flüchtiges computerlesbares Speichermedium, auf dem ein Computerprogramm gespeichert ist, das, wenn es von einer Verarbeitungseinheit eines Computersystems ausgeführt werden, das Computersystem veranlasst folgendes auszuführen:
- Empfangen einer Bildaufnahme, wobei in der Bildaufnahme ein Sammelbereich abgebildet ist,
- Bestimmen eines oder mehrerer Reduktionsparameter auf Basis des in der Bildaufnahme abgebildeten Sammelbereichs,
- Erzeugen eines reduzierten Datensatzes unter Verwendung des einen oder der mehreren Reduktionsparameter,
- Speichern des reduzierten Datensatzes und/oder Übermitteln des reduzierten Datensatzes an ein separates Computersystem.
